# EUROPEAN PATENT APPLICATION

(11) **EP 1 111 915 A1**
(43) Date of publication of application: **27.06.2001**
(21) Application number: 99310558.4
(22) Date of filing: 23.12.1999
(51) Int. Cl.: H04N 5/445, H04N 7/173, H04B 1/20

(54) **Control system**

(71) Applicant: Two Way TV Limited, Avonmore Road, London W14 8TS (GB)
(72) Inventor: Walton, Anthony S., Staines, Middlesex, TW18 3QP (GB); Hilton, Peter, London, N8 9NE (GB)
(74) Representative: Skone James, Robert Edmund

(57) **Abstract**

A control system for controlling operation of equipment such as a television and VCR via remotely generated signals in accordance with the first protocol. The system includes one or more remote controllers for generating equipment control signals in accordance with the second protocol. A STB includes a sensor for detecting control signals from the remote controllers, and a signal generator for generating and transmitting corresponding equipment control signals in accordance with the first protocol in receipt by receivers.

## Description

The invention relates to a control system for controlling operation of equipment which is controlled by remotely generated signals.

Equipment such as televisions (TVs), video cassette recorders (VCRs), hi-fi and the like were originally designed to be controlled by on-board control buttons which were operated manually. More recently, remotely controlled equipment has been developed in which the equipment has been provided with a signal detector such as an infrared sensor while control buttons for controlling operation of the equipment have been provided in a small remote control unit which is usually handheld. This is convenient for users who are able to control the equipment remotely. The remote controller generates a unique, usually infrared, signal which is received by the equipment sensor and then translated into a control action. Examples include turning equipment on and off, selecting a television channel and carrying out the usual functions of a VCR. Recently, many more sophisticated functions have also been provided on remote controllers.

A problem has arisen in that each equipment manufacturer has developed its own protocol for encoding the signals transmitted by the remote controller. This means that each piece of equipment requires its own remote controller. Some simplification has become possible where particular manufacturers have rationalised the protocols of their own different types of equipment so that each can be controlled from a single remote controller (for example, TV and VCR) but there is still no compatibility between remote controllers and equipment from different manufacturers.

Some attempts have been made to construct universal remote controllers. This has become possible because each manufacturer has published their protocols so these are available to remote controller manufacturers. The universal remote controllers are loaded with every or most of these protocols. In order to implement a universal remote controller, the user has to indicate in some way which manufacturer his equipment was made by and then the universal remote controller selects the appropriate protocol.

There are a number of disadvantages with these conventional universal remote controllers. Firstly, each must be loaded with the protocols of all manufacturers. This information is time consuming to obtain and keep updated.

A second problem is that if the user decides to upgrade his equipment, the relevant new control protocol may not be available in his universal remote controller. Consequently, he needs to purchase a new universal remote controller.

In accordance with the present invention, a control system for controlling operation of equipment which is controlled by remotely generated signals in accordance with a first protocol comprises a remote controller for generating equipment control signals in accordance with a second protocol; and control apparatus including means for detecting control signals generated by the remote controller, and a signal generator for generating and transmitting corresponding equipment control signals in accordance with the first protocol for receipt by a remote receiver of the equipment.

With this invention, instead of trying to configure the remote controller to operate in accordance with the required first protocol, we provide an intermediate control apparatus which converts control signals supplied from the remote controller in accordance with a second protocol into control signals in accordance with the appropriate first protocol which can then control the equipment. The advantage of this is that the construction of the remote controller can be simplified and thus its cost reduced over conventional universal remote controllers with the complexity being transferred to the control apparatus. This results in an overall reduction of cost when typically there may be several remote controllers associated with a single control apparatus. For example, the control apparatus is conveniently located in a "set top box" (STB) supplied for other purposes such as to enable the receipt of digital television signals and/or interactive TV. Of course, the control apparatus could form an integral part of the piece of equipment.

The signal generator could apply a prestored algorithm to convert signals in accordance with the second protocol into those in accordance with the first protocol but conveniently the signal generator includes a memory for storing data defining a concordance between signals according to the first and second protocols.

The control apparatus could constitute a stand-alone apparatus which is preloaded with the algorithm or concordance data and updating could be achieved by manually loading further data or software. However, the invention is particularly suitable for use with a system which further includes a data base remote from the control apparatus for storing data relating to control signals in accordance with the first protocol, the signal generator being adapted to receive said data from the remote data base and to store the data in the memory.

The advantage of this feature is that the construction of the control apparatus itself can be simplified so that it only needs to store concordance data relevant to the particular equipment which it must control while all the first protocol data relating to different manufacturers and different equipment is stored centrally at the remote database. This results in a very significant reduction in cost of both the remote controllers and control apparatus since only one database of first protocols needs to be maintained. Furthermore, any updates can easily be transmitted from the remote database, for example via any conventional communication medium, thus making it very easy to upgrade equipment locally or to take advantage of new or more sophisticated protocols. The signal generator may be coupled to the remote database by a communication medium chosen from the group comprising TV broadcast, cable, satellite, Internet and telephone communication systems.

In some cases, the remote database could be adapted regularly to transmit data defining all its first protocols, the control apparatus being adapted to monitor for those which it requires and then to download that data as appropriate. However, in order to reduce the amount of data being transmitted, the signal generator may be adapted to indicate to the remote database which of the first protocols it requires. Typically, this would occur on a dedicated link such as a telephone line but could also be carried out on different communication medium such as a cable or other system over which the data is transmitted.

In some cases, the remote controller will have an individual key for each control instruction. However, with more and more sophisticated control instructions becoming available, and with the variety of such control instructions between manufacturers, this would lead to a very complex remote controller. Preferably, therefore, in the case of a system for controlling equipment including display, the signal generator includes a processor for causing the appearance at least part of a remote controller designed to operate the equipment directly using signals according to the first protocol,to be displayed on the display the remote controller of the control system including means for controlling the display of a cursor to enable a user to select a desired control instruction from the displayed remote controller.

The display of at least part of a remote controller can be achieved if a bit map defining that appearance is stored within the control apparatus and this might be down loaded from the remote database at the same time as the corresponding first protocol. The advantage of this arrangement is that the number of control keys or buttons on the remote controller can be reduced significantly even to just sufficient to control the display of a cursor. Typically, however, the remote controller will include some basic function control buttons for example on/off, channel select and volume together with a cursor controller.

An example of a control system according to the invention will now be described with reference to the accompanying drawings, in which:
Figure 1 is a schematic block diagram of an interactive television system including an example of a control system according to the invention;
Figure 2 is a schematic view of a remote controller; and
Figure 3 is a schematic view of a display of a remote controller.

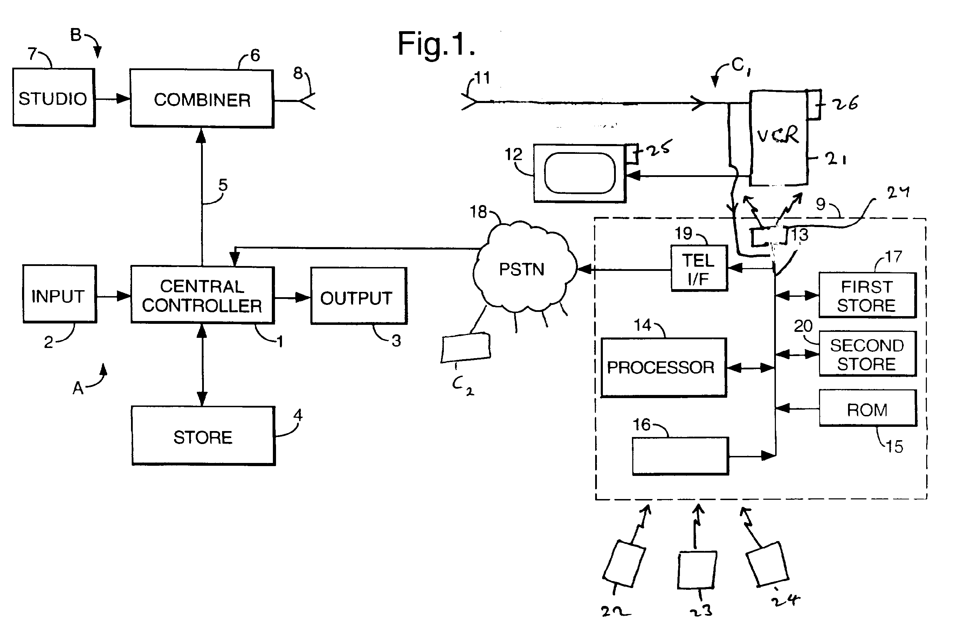

The interactive broadcast network shown in Figure 1 comprises a central control system A at a central location and including a central controller 1 which will include a computer such as a PC operating a Windows based system, connected to an input device 2 such as a keyboard and/or mouse and the like and to an output device 3 which may include a monitor and/or printer. A store 4 stores data relating to service functions and remote users, which can be accessed and amended by the central controller 1. The central controller 1 generates TV display signals and other control signals associated with various service functions on a land line 5 connected to a combining unit 6 of a TV broadcast system B. The combining unit 6 6 receives television broadcast signals from a studio 7 which, in the case of a live event, will have originated from outside broadcast cameras, and combines these with the signals on the line 5 so that they are transmitted simultaneously by a transmitter 8 to remote users or players C₁, C₂... The users will typically be remote not only from the system B but also from each other.

The signals supplied to the combiner 6 may be transmitted to the remote units within a vertical blanking interval (VBI) of the normal TV signal or on a separate radio FM-SCA channel or other data format such as a cable modem.

Other forms of transmission including satellite, cable and the internet may also be used to send signals to the remote users C.

Each remote user C₁,C₂..., only one shown in detail in Figure 1, has a home or remote unit 9 in the form of a set top box (STB), an aerial 11, a monitor 12, and a VCR 21 connected to the aerial 11 and the monitor 12. The home unit 9 includes an address/data bus 13 connected to the aerial 11, the bus 13 being connected to a microprocessor 14, a ROM 15 storing programme instructions for the processor 14, an infrared receiver 16, a first store (RAM) 17 for storing data supplied from the central controller 1, and a second signal store (RAM) 20 for storing data defining the identity of the remote unit 9 and the services to which the remote user has subscribed. Signals transmitted by the processor 14 can be communicated to the central controller 1 via a public switched telephone network 18 which is selectively accessed by a telephone interface unit 19 connected to the bus 13. Other media may be used for the return transmission including TV broadcast, cable, satellite and the Internet. In general the return signal medium will be different from the medium used to transmit to the remote user C.

The components are controlled from a number of remote controllers 22-24 each of which generates infrared signals in accordance with a "second" protocol following depression of appropriate control buttons to be described below, those infrared signals being received by the receiver 16 and converted into electronic signals which are supplied to the bus 13. The manner in which more than one remote controller 22-24 can be used with the same receiver 16 is described in more detail in EP-A-0921657 (USSN 09/203967) incorporated herein by reference. The remote controllers can be used both for controlling operation of the monitor 12 and VCR 21 as already described below and also for taking part in interactive applications such as interactive quiz shows and the like.

The monitor 12 and VCR 21 each include a respective infrared sensor 25, 26 adapted to receive infrared control signals from a remote source in accordance with a respective "first" protocol. Normally, these items of equipment would have been sold with proprietary remote controllers which can be used directly with those pieces of equipment to control them in accordance with corresponding proprietary first protocols. In the present case, however, the sensors 25, 26 receive control signals from an infrared blaster 27 that is within the STB 9 and includes two infrared LEDs.

The first store 17 which is in the form of flash memory includes a look up table which is addressed by signals transmitted by the remote controllers 22-24 in accordance with the second protocol and contains an equivalent TV or VCR first protocol signal at each address. The control signals which can be applied to the monitor, for example, include on/off, channel select and volume. Of course, there will be many other control signals as will be apparent to a person skilled in the art. Each of these control functions is defined by a particular signal generated by the remote controllers 22-24 in accordance with the second protocol. When a remote controller 22 generates one of these signals, for example a channel up command in accordance with the second protocol, this is received by the receiver 16 and converted to a corresponding electrical signal which is used by the processor 14 as an address into the LUT in the first store 17. The processor 14 recovers the corresponding TV first protocol control signal from the LUT which is then sent to the IR blaster 27 which outputs a corresponding infrared signal. This will be received by the sensor 25 causing the monitor 12 to tune to the next higher channel.

If instead, the user wishes to operate the VCR 21, he will activate another button on the remote controller 22-24 such as a "play" button. Once again, this will cause the remote controller 22-24 to issue a uniquely coded IR signal in accordance with the second protocol which is received by the receiver 16 converted to electrical form and used by the processor 14 to address the look up table in the first store 17. The data at the addressed location in the look up table is then used to control the IR blaster 27 to generate an IR signal with the appropriate code in accordance with the VCR first protocol which is sensed by the sensor 26 which then controls the VCR 21 accordingly.

As mentioned above, although the look up table in the first store 17 could be loaded locally, the invention is particularly suitable for remote downloading of data into the look-up table. Thus, the store 4 of the central location is provided with up to date versions of all manufacturers protocols (i.e. all first protocols) and when a user wishes to control a new piece of equipment such as a new VCR, the processor 14 will cause a simple menu to be displayed on the monitor 12 allowing the user to select a "new equipment" routine. In this routine, the user will be prompted to indicate the name of the manufacturer of the equipment concerned and the equipment type or serial number. This information will be returned to the central location via the PSTN 18. The central controller 1 will then extract from the store 4 the appropriate data defining the corresponding first protocol for that equipment and this will be transmitted together with a code identifying the STB 9 concerned. The STB 9 will then monitor for receipt of its unique identity code following which it will download the appropriate first protocol data and store it in the LUT 17 in appropriate locations.

Following this download, a check can be made to ensure the correct codes have been stored. This is most easily achieved by causing the IR blaster to emit a standby code and then to check the equipment has entered the standby mode.

Subsequently, if new protocols are introduced by manufacturers these can be added to the store 4 very quickly so that if a user buys a new piece of equipment, recently introduced, he will almost immediately have access to the appropriate first protocol data.

Another advantage of the invention is that it enables complex processing operations which normally have to be performed by a user directly with his remote controller to be simplified. For example, many VCRs offer a "videoplus" or VCR preprogramming facility in which the user must enter a particular code number for a TV program which he wishes to record and the VCR then programs itself to switch on and switch off at the appropriate times. In one example of the present invention, where an electronic program guide (EPG) is transmitted from the central location, this will be transmitted in association with the corresponding video plus code numbers. An EPG is an electronic on screen listing of television programs, times and channels. A user can then view the EPG on the monitor 12 in a "programming" mode and select a TV program which he wishes to record simply by highlighting the monitor to indicate the appropriate program and pressing an enter button on his remote controller. The processor 14 can then generate the appropriate codes read from the EPG by obtaining the corresponding VCR first protocol infrared coding required from the look up table in the first store 17 and then controlling the IR blaster 27 accordingly.

In another development, in order to enable all functions offered by a piece of equipment to be realised even with a relatively simple remote controller, the cental controller 1 can download with data defining a first protocol, a bit map defining the appearance of the proprietary remote controller associated with that first protocol. This bit map can be stored in the first store 17 and then in response to appropriate control instructions from the remote controllers 22-24 displayed on the monitor 12.

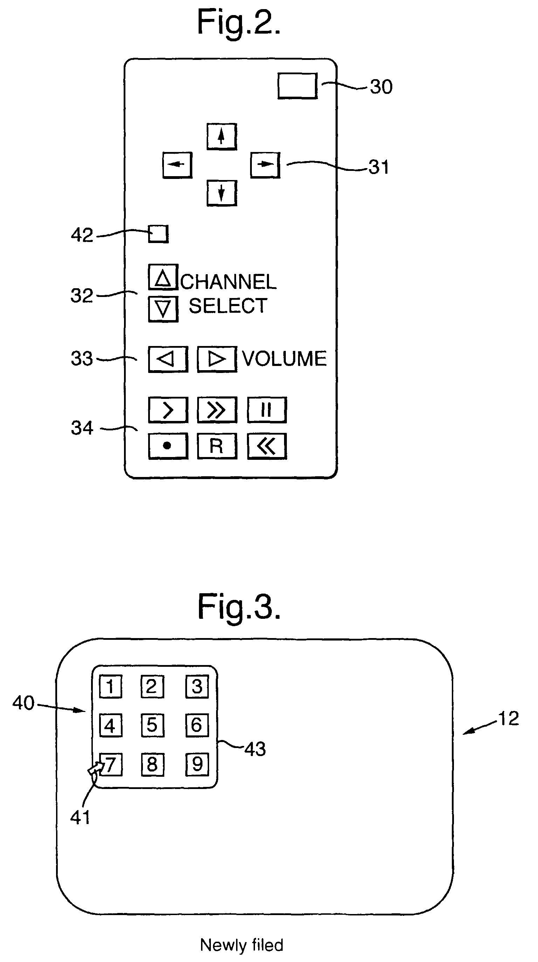

Figure 2 illustrates an example of a remote controller 22-24 which can be used in this latter implementation. As can be seen, the remote controller has a stand by button 30, cursor control buttons 31, channel select buttons 32, volume control buttons 33 and VCR control buttons 34. However, the remote controller does not include specific channel selection buttons defining channels by name or number. It also does not include any higher level functions typically offered by VCR manufacturers, for example a "dubbing mode". However, in cooperation with the processor 14, the remote controller can be used to cause at least part of the proprietary remote controller 43 to be displayed on the display 12 as shown in Figure 3. In this case, a 9 button keypad 40 is displayed allowing the user to move a cursor 41 into alignment with any one of the 9 buttons of the keypad using the cursor controls 31 and then to select the appropriate button by pressing an action button 42 on the remote controller.

A further advantage of the invention is that communication between the remote controllers 22-24 and the STB 9 can be in accordance with a proprietary protocol enabling much higher bit rates to be achieved and with conventional remote controllers. For example, we have designed a protocol which can operate at 115K bits/second which should be compared with conventional remote controllers which operate at about 400 bits/second.

Although the use of infrared radiation has been described, other forms of communication between the remote controllers and the STB 9 and between the STB 9 and the equipment could be used such as radio frequency, microwave or cable. Although the equipment described in this case includes a monitor and a VCR, other equipment could also be controlled from the STB such as Hi-Fi equipment and the like.

## Claims

1. A control system for controlling operation of equipment which is controlled by remotely generated signals in accordance with a first protocol, the system comprising a remote controller for generating equipment control signals in accordance with a second protocol; and control apparatus including means for detecting control signals generated by the remote controller, and a signal generator for generating and transmitting corresponding equipment control signals in accordance with the first protocol for receipt by a remote receiver of the equipment.

2. A system according to claim 1, wherein the signal generator includes a memory for storing data defining a concordance between signals according to the first and second protocols.

3. A system according to claim 2, the system further including a data base remote from the control apparatus for storing data relating to control signals in accordance with the first protocol, the signal generator being adapted to receive said data from the remote data base and to store the data in the memory.

4. A system according to claim 3, wherein the signal generator is coupled to the remote database by a communication medium chosen from the group comprising TV broadcast, cable, satellite, Internet and telephone communication systems.

5. A system according to claim 3, wherein the remote database stores data defining signals corresponding to more than one first protocol.

6. A system according to claim 5, wherein each first protocol corresponds to a respective piece of equipment.

7. A system according to claim 5, wherein the signal generator is adapted to indicate to the remote database which of the first protocols it requires.

8. A system according to claim 1, wherein the remote controller has a number of keys, each corresponding to a respective control instruction.

9. A system according to claim 1, for controlling equipment including a display, the signal generator including a processor for causing the appearance at least part of a remote controller designed to operate the equipment directly using signals according to the first protocol to be displayed on the display, the remote controller of the control system including means for controlling the display of a cursor to enable a user to select a desired control instruction from the displayed remote controller.

10. A system according to claim 1, wherein the control apparatus is provided in a separate unit, such as a set top box.

11. A system according to claim 1, wherein the remote controller communicates with the control apparatus via non-visible, preferably infrared, radiation.

12. A system according to claim 1, wherein the signal generator transmits signals in the form of non-visible radiation, preferably infrared.

13. A system according to claim 1, wherein the signals transmitted by the signal generator are adapted to control one or more of a television, video, or hi-fi equipment.
